# EUROPÄISCHE PATENTSCHRIFT

(11) **EP 0 737 332 B1**
(45) Veröffentlichungstag und Bekanntmachung des Hinweises auf die Patenterteilung: **14.04.1999**
(21) Anmeldenummer: 95900651.1
(22) Anmeldetag: 18.11.1994
(51) Int. Cl.: G05B 19/042

(54) **STEUERUNG UND/ODER REGELUNG EINER TÜR**
DOOR-CONTROL UNIT
COMMANDE ET/OU REGULATION D'UNE PORTE

(30) Priorität: 27.12.1993 DE 4344729
(43) Veröffentlichungstag der Anmeldung: 16.10.1996
(73) Patentinhaber: DORMA GmbH + Co. KG, 58256 Ennepetal (DE); DORMA LAND BRANDENBURG GMBH & CO. KG, 14776 Schmerzke (DE)
(72) Erfinder: RESSEL, Willi, D-58454 Witten (DE); THEILE, Ulrich, D-58091 Hagen (DE); SONNTAG, Guido, D-30989 Gehrden (DE); ROWEDDA, Volker, D-30982 Pattensen (DE); LUDWIG, Heinz, D-30823 Garbsen (DE)
(86) Internationale Anmeldenummer: DE9401373
(87) Internationale Veröffentlichungsnummer: WO9518403

(56) Entgegenhaltungen:
- EP-A- 0 109 734
- WO-A-91/10201
- DE-A- 4 039 465
- DE-A- 4 129 287
- DE-A- 4 133 636
- DE-U- 9 307 326
- GB-A- 2 271 491
- US-A- 4 633 412
- IEEE MICRO, Bd.7, Nr.5, November 1987, NEW YORK US Seiten 27 - 50 H.D. KIRRMANN 'Fault Tolerance in Process Control: An Overview and Examples of European Procucts.'
- PATENT ABSTRACTS OF JAPAN vol. 9, no. 156 (P-368) 29. Juni 1985 & JP,A,60 029 807 (MITSUBISHI) 15. Februar 1985
- PATENT ABSTRACTS OF JAPAN vol. 14, no. 198 (M-965) 23. April 1990 & JP,A,02 040 441 (TOKYO KEIKI CO LTD) 9. Februar 1990

## Beschreibung

Die Erfindung betrifft eine Steuerung und/oder Regelung einer Tür gemäß dem Oberbegriff des Patentanspruches 1. Türen dieser Gattung werden automatisch angetrieben, d.h. es ist ein Antriebsmotor vorhanden, der mittels einer Mikroprozessorsteuerung oder auch Regelung den Funktionsablauf der Tür gewährleistet. Damit die Tür in ihrem Bewegungsablauf auch richtig gesteuert wird, sind Sensoren vorhanden, die in der Regel einen automatischen Betrieb einer solchen Tür zulassen. Es ist jedoch auch möglich, durch manuell abgegebene Signale, wie beispielsweise auf Schalterdruck, eine solche Tür in Gang zu setzen. Hat der Sensor in seinem Erfassungsbereich eine Person oder einen Gegenstand erkannt, so gibt er dieses Signal an die Steuerung weiter, die ihrerseits dafür Sorge trägt, daß in kürzester Zeit z.B. eine Schiebetür geöffnet wird. Nach Verlassen des Ansprechbereiches der Sensorik schließt sich diese Tür automatisch wieder. Türen dieser Art sind in der heutigen Geschäftswelt überall dort anzutreffen, wo ein hoher Personendurchsatz vorhanden ist, wobei jedoch gleichzeitig in den dazwischenliegenden Zeiträumen, wo keine Personen den Zutrittsraum der Tür passieren, diese auch verschlossen sein sollte. Durch gesonderte Programmschalter ist es auch möglich, die automatischen Funktionen solcher Türen außer Kraft zu setzen.

In der WO 91/10201 wird ein Verfahren beschrieben, welches einen automatischen Schweißvorgang realisiert. Dabei ist eine Grundeinheit für die Steuerung vorhanden, die durch entsprechende Erweiterungsmodule erweitert werden kann. Die Grundeinheit ist mit den Erweiterungsmodulen über ein Bussystem verbunden. Die Grundeinheit ist dabei in der Lage, automatisch zu erkennen, welches Erweiterungsmodul angeschlossen ist.

Dem deutschen Gebrauchsmuster G 93 07 326.7 ist eine Türsteuereinheit zu entnehmen, bei der der Automatisierungsgrad durch einen Mikrocontroller für die verschiedensten Funktionen sichergestellt wird. Dabei ist an dem Mikrocontroller über eine Schnittstelle ein Bussystem angeschlossen, über welches Diagnosegeräte, Dateneingabe- und Datenausgabegeräte angeschlossen werden können.

Die WO 92/13300 offenbart eine elektronische Steueranordnung für eine automatische Tür. Bei dieser aufwendigen Steuereinheit sind zwei unabhängige Steuerungssignale von einer einen Mikroprozessor beinhaltenden Einheit vorhanden, die an zwei Motoreinheiten zur Bewegung der Fahrflügel weitergegeben werden. Durch diese Steuerungsart lassen sich die beiden Fahrflügel unabhängig steuern.

Eine Tür der gattungsgemäßen Art ist aus der deutschen Offenlegungsschrift 39 40 762 bekanntgeworden, in der der Antrieb einer Schiebetür beschrieben wird. Die Flügel der Tür werden motorisch angetrieben, wobei der durch einen Programmschalter aktivierbaren Standardsteuerung zur automatischen Bewegung der Flügel eine selbstüberwachende, elektronische Zusatzsteuerung zugeschaltet werden kann. Diese Zusatzsteuerung wird aus einem Türsicherheitsbaustein gebildet, der zwischen einem Innenbewegungsmelder, Programmschalter und Endschalter einerseits sowie der Standardsteuerung, elektromagnetischer Kupplung und Anzeigeeinrichtung andererseits geschaltet ist.

Die Aufgabe der Erfindung ist es, durch die Gestaltung der Steuerung und Regelung die Fertigungskosten dahingehend zu senken, daß aufgrund der verschiedenartigen Typen von Türen die Typenvielzahl von Steuerungen reduziert wird.

Die Erfindung wird gemäß dem Kennzeichen des Anspruchs 1 gelöst. Durch die Verwendung einer Grundeinheit, die es ermöglicht, sämtliche notwendigen Informationen zur Steuerung bzw. Regelung einer angeschlossenen Tür zu verarbeiten, d.h. Programmschalter, Sensoren, Schlüsselschalter, Not-Aus, Impulsgeber usw. werden direkt von der Grundeinheit verarbeitet. Das von der Grundeinheit ausgehende Steuer- bzw. Regelsignal für den angeschlossenen Motor wird diesem direkt zugeleitet, und über einen Impulsgeber, vorzugsweise ein Inkrementalgeber, wird die Position der Tür bzw. die Drehrichtung des Motors abgefragt. Die Grundeinheit ist darüber hinaus mit einem Ablaufprogramm softwaremäßig so versehen, daß sie sämtliche Informationen, die zum sicheren Ablauf einer Türbewegung notwendig sind, abspeichern kann. Abgefragt werden kann diese Information von der Grundeinheit durch einen von außen anzuschließenden Manipulator. Jedoch ist nicht nur die Abfrage, sondern auch die Änderung des Programmablaufes möglich, weil hierdurch eine problemlose Anpassung an die unterschiedlichsten Türtypen bzw. auch an ein geändertes Laufverhalten der Tür möglich ist. Gleichzeitig kann jedoch auch der Manipulator als Diagnoseport eingesetzt werden, d.h. es können Parameter der Tür ermittelt bzw. auch aufgezeichnet werden, beispielsweise, ob die Tür schwergängig ist, welche Stromaufnahme der Motor hat, und es sind auch statistische Auswertungen wie beispielsweise Lastspiele oder Stillstandszeiten möglich. Die Kommunikation zwischen dem Manipulator und der Grundeinheit wird durch eine Schnittstelle der Art RS 485 sichergestellt. Diese Art der Schnittstelle ermöglicht es, neben der Datenabfrage und Eingabe auch andere Arten der Kommunikation mit der Tür vorzunehmen, wie beispielsweise über eine Hausleittechnik bzw. Rettungswegtechnik, wo von einer zentralen Stelle aus, beispielsweise im Gefahrenfall, die Tür automatisch geöffnet oder geschlossen werden kann.

Das Grundmodul ist ferner in der Lage, zu erkennen, welcher Motor angeschlossen ist, d.h. das Grundmodul kann für verschiedenste Arten von Türen, wie z.B. Schiebetüren, Bogenschiebetüren, Falttüren, Drehtüren, Karusselltüren usw., eingesetzt werden. Ferner ist eine Überwachung des Motorstromes in der Form möglich, daß von der Grundeinheit Impulse an den Motor im Stillstand zur Messung des mit den in der Software abgespeicherten Daten vergleicht. Bei einer Differenz wird der Antrieb zum Stillstand gebracht.

Das Grundmodul ist ebenfalls mit einem Stecksystem ausgerüstet, auf dem ein Bussystem zur Reduzierung der Leitungssysteme aufliegt. Über dieses Stecksystem ist es möglich, verschiedene unterschiedliche Erweiterungsmodule mit der Grundeinheit zu verbinden. Dabei erkennt die Grundeinheit automatisch, welche Art von Erweiterungsmodul angeschlossen ist. Die Erweiterungsmodule können mit unterschiedlichster Intelligenz ausgerüstet sein. Durch diese Maßnahme ist es möglich, eine marktgerechte Lagerhaltung aufzubauen und die Fertigungskosten drastisch zu senken.

Die Erfindung wird anhand eines schematisch dargestellten Ausführungsbeispieles näher erläutert. Es zeigt:

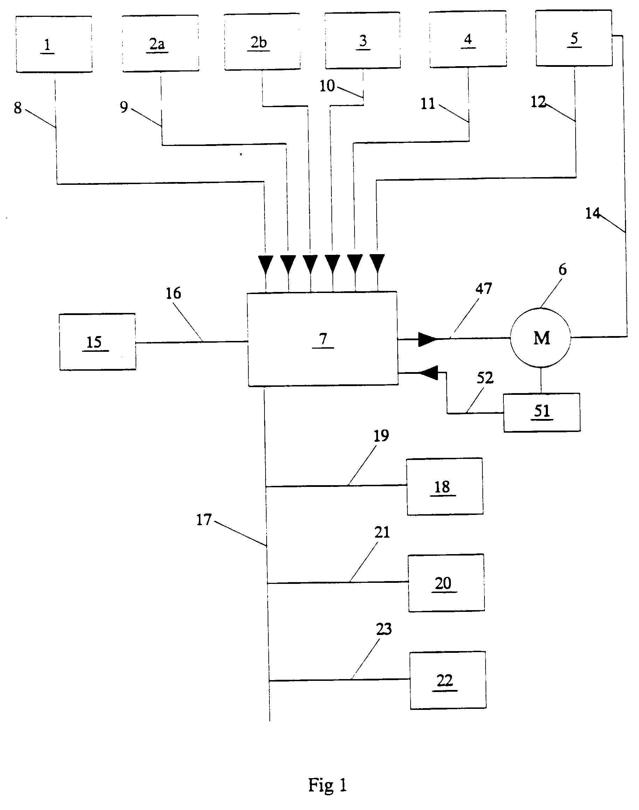

- Figur 1:: Grundeinheit mit angeschlossenen Erweiterungsmodulen
- Figur 2:: Blockschaltbild eines Erweiterungsmoduls
- Figur 3:: Blockschaltbild eines Erweiterungsmoduls
- Figur 4:: Blockschaltbild eines Erweiterungsmoduls
- Figur 5:: Blockschaltbild des Datenbusses

An eine Grundeinheit 7 lassen sich die verschiedensten Eingabeeinheiten oder Sensoren, wie beispielsweise der Programmschalter 1 über eine Verbindung 8, einen Sensor 2 über eine Verbindung 9, ein Schlüsselschalter 3 über eine Verbindung 10, ein Not-Aus-Taster über die Verbindung 11, anschließen. Mittels des Programmschalters 1 wird der Grundeinheit 7 das Ablaufprogramm vorgegeben. Der Sensor 2 kann beispielsweise ein Infrarotsensor oder Radarmelder sein, jedoch ist es auch möglich, hier eine Lichtschranke anzuschließen. Die Sensorik hat dafür Sorge zu tragen, daß ein ordnungsgemäßer Ablauf der Türflügel gegeben ist. Mit dem Schlüsselschalter 3 kann die Tür beispielsweise für den Abschluß verriegelt werden, bzw. auch ein Resetstart durchgeführt werden, nachdem in einem Gefahrenfall, beispielsweise der Not-Aus-Taster 4 betätigt worden ist. All diese eingehenden Informationen werden in der Grundeinheit 7 in einem nicht dargestellten Ablaufprogramm verarbeitet. Das Ergebnis dieser Informationen wird über die Verbindung 13 an den Motor 6 gegeben, der entsprechend dem Programm die Türflügel bewegt. Gleichzeitig werden über die Verbindung 14 mittels eines Impulsgebers 5 die Drehrichtung und die Position der Tür gemessen. Diese Daten gehen über die Verbindung 12 zurück an die Grundeinheit 7.

Da die Grundeinheit 7 auch in der Lage ist, den angeschlossenen Motortyp 6 zu erkennen, wird mittels einer Stromüberwachung 51 im Stillstand des Motors der Motorinnenwiderstand gemessen und dieses Ergebnis zurück an die Grundeinheit 7 über die Verbindung 52 geleitet, die ihrerseits einen Vergleich mit den innerhalb des Ablaufprogrammes gespeicherten Werten vornimmt. Sollte hier eine nicht zugelassene Differenz zwischen der abgespeicherten Kurve (Sollwert) des Motors und den vorherrschenden Werten (Istwert) gegeben sein, so würde die Grundeinheit 7 den weiteren Bewegungsablauf des Motors blockieren. Erst durch ein erneutes Starten der Tür wäre deren Bewegungsablauf wieder freizugeben, nachdem der Fehler beseitigt ist.

An der Grundeinheit 7 kann auch ein Manipulator 15 über die Schnittstelle 16 angeschlossen werden. Die Schnittstelle 16 kann beispielsweise eine RS 485-Schnittstelle sein. Über den Manipulator 15 und in Verbindung mit der Schnittstelle 16 ist es möglich, Daten der Grundeinheit 7 abzufragen bzw. Änderungen des sich innerhalb der Grundeinheit 7 befindlichen Ablaufprogrammes vorzunehmen. Ebenfalls kann über den Manipulator 15 das Laufverhalten der Tür sowohl im gegenwärtigen Zustand als auch in der Vergangenheit überwacht werden, indem die Daten und Parameter aufgezeichnet werden. Die Schnittstelle 16 ermöglicht darüber hinaus den Anschluß und damit die Kommunikation mit der in dem Gebäude vorhandenen Hausleittechnik oder Rettungswegtechnik, die somit auch die Tür durch einen nicht vor Ort gegebenen Impuls, beispielsweise im Brandfall schließen oder bei Flucht- und Rettungswegtüren sicher öffnen kann.

Die Grundeinheit 7 enthält ein Stecksystem, auf welchem ein Bus 17 aufliegt, der es ermöglicht, unterschiedliche Erweiterungsmodule 18, 20, 22 anzuschließen. Diese Erweiterungsmodule 18, 20, 22 werden wahlweise mit ihren Steckem 19, 21 und 23 über das Bussystem 17 mit der Grundeinheit 7 verbunden. Die Grundeinheit 7 ist zwar wie vorbeschrieben in der Lage, autark einen Antrieb zu steuern und zu regeln, jedoch ist es aufgrund der heute am Markt vorhandenen unterschiedlichen Türsysteme und Türweiten oft notwendig, mehr Informationen vorliegen zu haben bzw. verarbeiten zu müssen als in der Grundeinheit 7 vorhanden sind. Die Idee der Grundeinheit ist deshalb so gestaltet, daß sie mit der für den Betrieb einer einfachen Tür notwendigen Intelligenz ausgerüstet ist, gleichzeitig aber auch in der Lage ist, durch Zusätze von Erweiterungsmodulen ausgebaut zu werden, zu einem System mit höchster Intelligenz für Türen, die im sicherheitsrelevanten Bereich, beispielsweise Flucht- und Rettungswegen eingesetzt werden.

Aus diesem Grunde sind die Erweiterungsmodule 18,20, 22 oder auch noch weitere Module zum Anschluß an die Grundeinheit 7 vorgesehen. Damit eine ordnungsgemäße Kommunikation zwischen der Grundeinheit 7 und dem jeweils angeschlossenen Erweiterungsmodul möglich ist, wird über ein Bussystem 17 diese Kommunikation sichergestellt. Gleichzeitig kann wie später noch ausgeführt wird, auch durch das Vorhandensein der Informationen sowohl im Erweiterungsmodul 18, 20 oder 22 als auch in der Grundeinheit 7 eine Redundanz der Steuerung vorliegen, was gleichzeitig ein höheres Sicherheitsniveau darstellt.

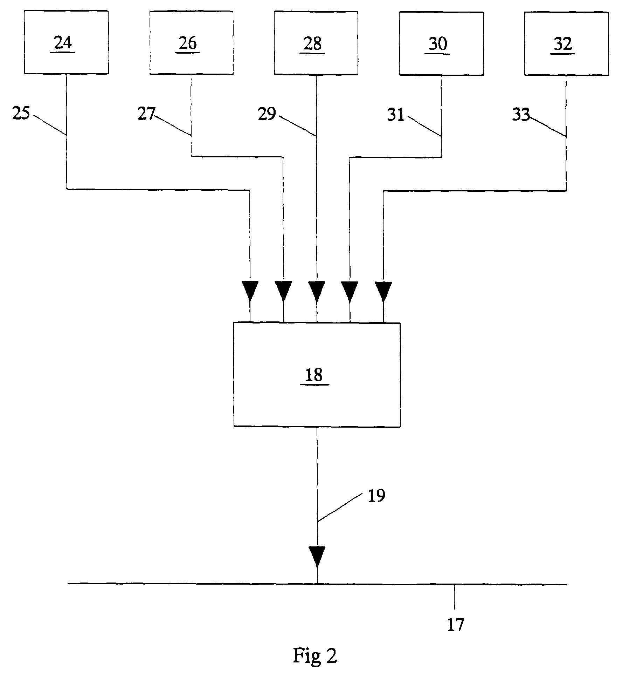

Die Figur 2 zeigt ein Erweiterungsmodul 18, welches über die Steckverbindung 19 mit dem Bus 17 verbunden wird. So kann beispielsweise ein Sensor 24 über die Verbindung 25 an das Erweiterungsmodul angeschlossen werden. Dieser Sensor 24 kann eine Lichtschranke oder ein Radarmelder sein. Aber auch eine Notstromversorgung 26 kann in Form eines Akkumoduls über die Verbindung 27 das Erweiterungsmodul 18 mit der notwendigen Energie versorgen. Auch ein separater Programmschalter 28 kann über die Verbindung 29 angeschlossen werden. Neben dem bereits erwähnten Sensor 24 können weitere Sensoren 30 über die Verbindung 31 mit dem Erweiterungsmodul 18 kommunizieren. Da es sich durch den Anschluß des Erweiterungsmoduls 18 auch um eine andere Art der Tür handelt, ist es möglich, hier innerhalb des Erweiterungsmoduls 18 eine Verriegelungseinheit 32 zu verarbeiten, deren Meldung über die Verbindung 33 dem Erweiterungsmodul 18 mitgeteilt wird.

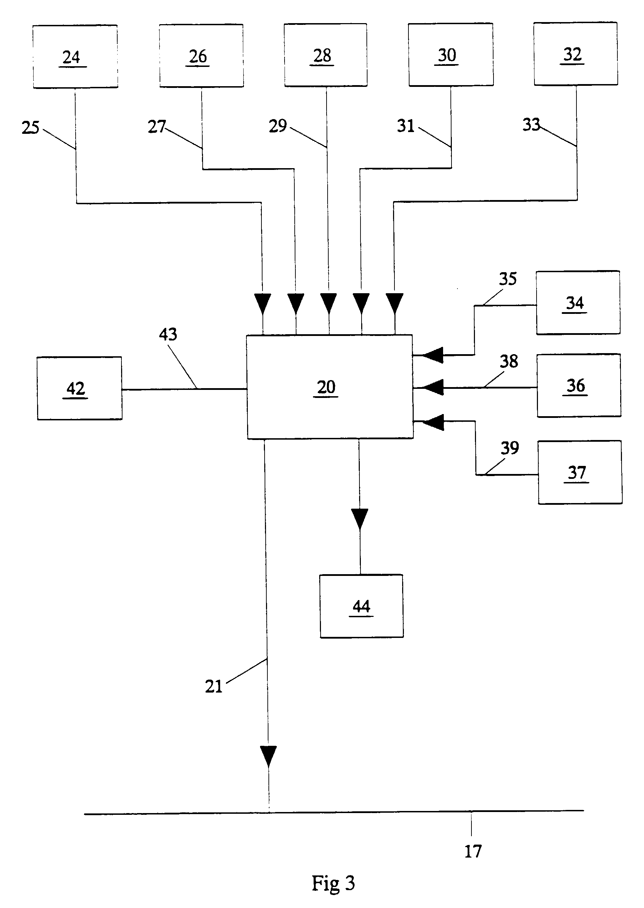

Die Figur 3 zeigt ein weiteres Erweiterungsmodul 20 in einer Blockdarstellung, wo neben den bereits, die in der Figur 2 angesprochenen Informationsträgern, wie Sensor 24, Notstrom 26, Programmschalter 28, Sensor 30 und Verriegelung 32, weitere für den Betrieb einer speziellen Tür notwendigen Informationen vorliegen. Dieses sind beispielsweise eine Schließkantensicherung 34, die über die Verbindung 35 dem Erweiterungsmodul 20 zugeleitet wird. Handelt es sich diesem Falle um eine Schiebetür, so kann auch diese innerhalb bestimmter Anwendungsbereiche eingebaut werden. Hier wäre eine Zusatzinformation 36 zu nennen, die für die Apothekenschaltung diese Informationen über die Verbindung 38 an das Erweiterungsmodul 20 gibt. Auch kann eine weitere Zusatzinformation 37 für eine Schleuse über die Verbindung 39 angeschlossen werden. Eine den Umständen gegebene Türparameteranpassung 42 ist auch möglich, da diese über die Verbindung 43 an das Erweiterungsmodul 20 gegeben wird. Über diese Türparameteranpassung oder -änderung können beispielsweise mittels Potentiometern Geschwindigkeiten oder Offenhaltezeiten eingestellt werden. Da es sich hier um ein Erweiterungsmodul mit höherer Intelligenz handelt, ist auch eine Anzeigeeinheit 44 vorhanden, um den Zustand bzw. einen Fehler der Tür anzuzeigen. Gleichzeitig kann diese Anzeige auch für diagnostische Zwecke verwendet werden.

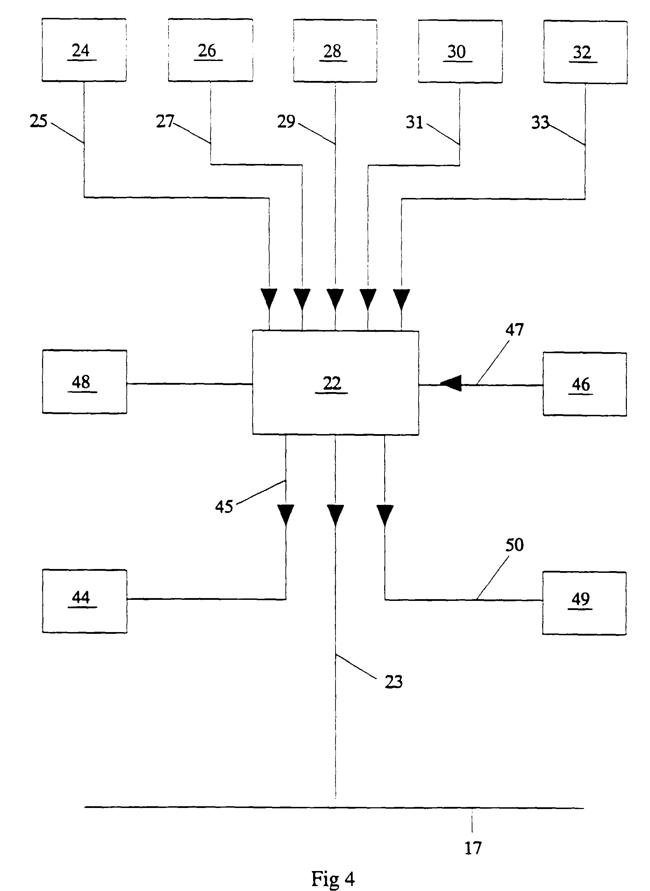

Betracht man das Blockschaltbild der Figur 4, so sind neben den bereits in den vorgehenden Figuren beschriebenen Funktionen der Erweiterungsmodule hier weitere Funktionen vorhanden, die beispielsweise eine Tür in dem Bereich der Flucht- und Rettungswege einsetzbar machen. So kann z.B. ein Türkontakt 46 die Öffnungsweite der Tür bei 80 % über die Verbindung 47 an das Erweiterungsmodul 22 melden. Zur weiteren Steigerung der Sicherheit kann ein Kontrollsystem 48 vorhanden sein, was beispielsweise in Verbindung mit einem Watch-Dog-Timer ein Mikroprozessorsystem überwacht. Wird die angeschlossene Tür im Flucht- und Rettungsweg verwendet, so ist eine Ansteuerung eines Hilfsantriebes 49 über die Verbindung 50 möglich.

Wie die Beschreibung der vorhergehenden Blockschaltbilder gezeigt hat, ist durch die Schaffung eines Grundmoduls in Verbindung mit einem Bussystem und den dann anzuschließenden Erweiterungsmodulen ein Baukastensystem geschaffen worden, welches die Möglichkeit bietet, unterschiedlichste Türtypen anzuschließen bzw. auch redundante Systeme aufzubauen, indem beispielsweise Informationen in der Grundeinheit 7 und in den Erweiterungsmodulen 18, 20 oder 22 kein Konsens der Informationen zu erzielen, so wird automatisch der Antrieb stillgesetzt, weil ein Fehler im System vorliegt

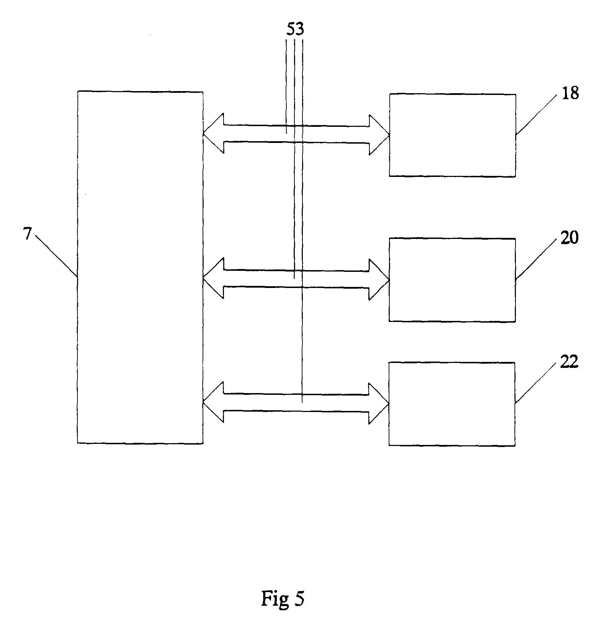

Neben der wahlweisen Anschlußmöglichkeit der unterschiedlichsten Erweiterungsmodule 18, 20, 22 an die Grundeinheit 7 über ein Steckersystem, kann auch die Anschlußmöglichkeit von mehreren Erweiterungsmodulen gleichzeitig an die Grundeinheit 7 gegeben sein, wie es die Figur 5 zeigt. In diesem Falle ist entsprechend der anzuschließenden Erweiterungsmodule auf der Grundeinheit 7 ein ausreichendes Steckersystem vorzusehen. Die einzelnen Stecker können dabei mit einer Kodierung versehen sein, um gleichzeitig eine richtige Signalverarbeitung auf der Grundeinheit 7 sicherzustellen.

Aufgrund ihrer Funktion ist die Grundeinheit 7 in der Lage, hier entsprechend dem Erweiterungsmodul eine Signalverarbeitung durchzuführen.

Im Rahmen der Realisierung einer standardisierten Kompaktbauweise von universellen Türsteuerungen können die einzelnen Module 18, 20, 22 über sogenannte VG-Steckverbinder miteinander/untereinander mit der Grundeinheit 7 verbunden werden. Dabei können die VG-Steckverbinder gerade oder gewinkelt ausgebildet sein, sind aber vorzugsweise Bestandteil der Grundeinheit 7. Auf diese Weise lassen sich so unterschiedlichste Erweiterungsmodule 18, 20, 22 für die speziellen Bedürfnisse einzelner Steuerungen oder Steuerungsfunktionen als zusätzliche Option in Verbindung mit der Grundeinheit 7 realisieren.

Die Signalübertragung zwischen den einzelnen Erweiterungsmodulen 18, 20, 22 und der Grundeinheit 7 erfolgt über eine einzige Leitung mittels eines bidirektionalen Datenbusses 53. Bei diesem Datenbus 53 werden die signifikanten Daten als Binärinformation seriell von einem oder mehreren Erweiterungsmodulen 18, 20, 22 zu der Grundeinheit 7 übertragen. Dieses trifft ebenfalls für die Datenübertragung unter den einzelnen Erweiterungsmodulen 18, 20 oder 22 zu. Ausgelesen werden die entsprechenden Daten auf der Grundeinheit 7 und den Erweiterungsmodulen 18, 20 oder 22 dort jeweils parallel. Dieses ergibt so gewissermaßen eine Schieberegisterfunktion, die es ermöglicht, die vorhandenen Informationen getaktet hintereinander zu übertragen. Sie stehen dadurch in den einzelnen Modulen als Parallelinformation zur Verfügung und könnten auf dem Modul weiterverarbeitet werden.

Durch einen solchen Datenbus 53 kann eine Realisierung der einzelnen Erweiterungsmodule 18, 20, 22 mit unterschiedlichster Intelligenz ausgeführt werden, wie es in den einzelnen Ausführungsbeispielen aufgezeigt wird. Bei einer solchen Vorgehensweise braucht die hardwaremäßige Ausgestaltung der Steckverbindungen und das Prinzip der Datenübertragung für den Anschluß der unterschiedlichsten Türsysteme im einzelnen nicht geändert werden. Die Erfindung stellt somit eine Bereicherung in der Türtechnik dar, weil mit einer Grundeinheit und unterschiedlichen Erweiterungsmodulen ein ausbaufähiges Konzept geschaffen wurde, welches allen steuerungstechnischen Türantrieben gerecht wird.

### Bezugszeichen

- 1: Programmschalter
- 2: Sensor
- 3: Schlüsselschalter
- 4: Not-Aus
- 5: Impulsgeber
- 6: Motor
- 7: Grundeinheit
- 8: Verbindung
- 9: Verbindung
- 10: Verbindung
- 11: Verbindung
- 12: Verbindung
- 13: Verbindung
- 14: Verbindung
- 15: Manipulator
- 16: Schnittstelle
- 17: Bus
- 18: Erweiterungsmodul
- 19: Stecker
- 20: Erweiterungsmodul
- 21: Stecker
- 22: Erweiterungsmodul
- 23: Stecker
- 24: Sensor
- 25: Verbindung
- 26: Notstrom
- 27: Verbindung
- 28: Programmschalter
- 29: Verbindung
- 30: Sensor
- 31: Verbindung
- 32: Verriegelung
- 33: Verbindung
- 34: Schließkantensicherung
- 35: Verbindung
- 36: Zusatzinformation (Apotheke)
- 37: Zusatzinformation (Schleuse)
- 38: Verbindung
- 39: Verbindung
- 42: Parameteranpassung
- 43: Verbindung
- 44: Anzeigemodul
- 46: Türkontakt 80 %
- 47: Verbindung
- 48: Kontrollsystem
- 49: Ansteuerung Hilfsantrieb
- 50: Verbindung
- 51: Stromüberwachung
- 52: Verbindung
- 53: Datenbus

## Patentansprüche

1. Steuerung und/oder Regelung einer durch einen Antriebsmotor (6) angetriebenen Tür, die mit einer Mikroprozessorsteuerung bzw. Regelung, welche ein Bussystem (17) zur Übertragung der elektrischen Daten und Informationen beinhaltet, ausgestattet ist, und deren Bewegungsablauf durch ein bzw. mehrere Sensorsignale oder manuelle Signale aktiviert wird, und mechanische und/oder elektrische Sicherheitseinrichtungen vorhanden sind, dadurch gekennzeichnet, daß eine Grundeinheit (7) für die Steuerung bzw. Regelung des Motors (6) vorhanden ist, die durch Erweiterungsmodule (18, 20, 22) erweitert werden kann, wobei die Erweiterungsmodule (18, 20, 22) mit der Grundeinheit (7) durch ein Bussystem (17) miteinander verbunden sind, und die Grundeinheit (7) automatisch erkennt, welches Erweiterungsmodul (18, 20, 22) angeschlossen ist, und daß die Verarbeitung von Informationen sowohl in der Grundeinheit (7) als auch in dem jeweiligen angeschlossenen Erweiterungsmodul (18, 20, 22) vorgenommen und das Ergebnis miteinander verglichen wird, und bei einer Differenz eine Störmeldung abgegeben wird, wobei über einen Manipulator (15) die in der Grundeinheit (7) gespeicherten oder vorliegenden Daten abgefragt und geändert werden können

2. Steuerung und/oder Regelung nach Anspruch 1, dadurch gekennzeichnet, daß in der Grundeinheit (7) eine Stromüberwachung (51) vorhanden ist, die den Motorstrom des Motors (6) ermittelt.

3. Steuerung und/oder Regelung nach Anspruch 2, dadurch gekennzeichnet, daß von der Stromüberwachung (51) Impulse an den Motor (6) abgegeben werden und diese in einem Rückmeß-Verfahren mit den abgespeicherten Werten verglichen werden.

4. Steuerung und/oder Regelung nach Anspruch 1, dadurch gekennzeichnet. daß der Manipulator (15) über eine RS 485-Schnittstelle (16) mit der Grundeinheit (7) bidirektional kommuniziert.

5. Steuerung und/oder Regelung nach Anspruch 4, dadurch gekennzeichnet, daß über die Schnittstelle (16) auch Daten, die nicht im direkten Zusammenhang mit der Steuerung des Motors (6) in Beziehung stehen, verarbeitet werden können.

6. Steuerung und/oder Regelung nach Anspruch 1, dadurch gekennzeichnet, daß die Erweiterungsmodule (18, 20, 22) mit unterschiedlicher Intelligenz ausgestattet sind.

7. Steuerung und/oder Regelung nach Anspruch 1, dadurch gekennzeichnet, daß die Grundeinheit (7) und die Erweiterungsmodule (18, 20, 22) über Steckverbindungen verbunden werden.

8. Steuerung und/oder Regelung nach Anspruch 7, dadurch gekennzeichnet, daß die Steckverbindungen kodiert sind.

9. Steuerung und/oder Regelung nach Anspruch 1, dadurch gekennzeichnet, daß der Informationsaustausch zwischen der Grundeinheit (7) und den Erweiterungsmodulen (18, 20, 22) über einen bidirektionalen Datenbus (53) erfolgt.

10. Steuerung und/oder Regelung nach Anspruch 9, dadurch gekennzeichnet, daß über den Datenbus (53) die Information seriell übertragen und in der Grundeinheit (7) bzw. in den Erweiterungsmodulen (18, 20, 22) jeweils parallel ausgelesen wird.

## Claims

1. An open-loop and/or closed-loop control system for a motor-driven (6) door equipped with a microprocessor open-loop or closed-loop control system comprising a bus system (17) for transmitting the electrical data and information, the door movement sequence being activated by one or more sensor signals, mechanical and/or electrical safety means being provided, characterised in that a basic unit (7) is provided for the open-loop or closed control of the motor (6) and can be expansed by expansion modules (18,20,22), the expansion modules (18,19,20) being interconnected to the base unit (7) by a bus system (17), and the basic unit (7) automatically recognises which expansion module (18,19,20) is connected, and in that the processing of information is effected both in the basic unit (7) and in whichever expansion module (18,20,22) is connected and the results are compared with one another and a fault signal is delivered in the event of any difference, whereas current data or data stored in the basic unit (7) can be called up and amended via a manipulator (15)

2. An open-loop and/or closed-loop control system according to claim 1, characterised in that a current monitoring means (51) is provided in the basic unit (7) to detect the current of the motor (6).

3. An open-loop and/or closed-loop control system according to claim 2, characterised in that the monitoring means (51) delivers pulses to the motor and the pulses are compared with the stored values in a remeasuring process.

4. An open-loop and/or closed-loop control system according to claim 1, characterised in that the manipulator (15) communicates bi-directionally with the basic unit (7) via an RS 485 interface (16).

5. An open-loop and/or closed-loop control system according to claim 4, characterised in that data not directly related to the control of the motor (6) can also be processed via the interface (16).

6. An open-loop and/or closed-loop control system according to claim 1, characterised in that the expansion modules (18,20,22) are equipped with differnt intelligence.

7. An open-loop and/or closed-loop control system according to claim 1, characterised in that the basic unit (7) and the expansion modules (18,20,22) are connected by plug-in connections.

8. An open-loop and/or closed-loop control system according to claim 7, characterised in that the plug-in connections are coded.

9. An open-loop and/or closed-loop control system according to claim 1, characterised in that the information exchange between the basic unit (7) and the expansion modules (18,20,22) is effected via a bidirectional data bus (53).

10. An open-loop and/or closed-loop control system according to claim 9, characterised in that by the way of the data bus (53) the information is tranmitted serially and is read out in parallel in each case in the basic unit (7) and in the expansion modules (18,20,22).

## Revendications

1. Commande et/ou régulation d'une porte actionnée par un moteur de commande (6), qui est équipée d'une commande à microprocesseur ou régulation, laquelle comporte un système de bus (17) pour la transmission des données et informations électriques, et dont le cours du mouvement est activé par un ou plusieurs signaux de détecteur ou signaux manuels et dans laquelle existent des dispositifs de sécurité mécaniques et/ou électriques,
caractérisée en ce qu'
une unité de base (7) existe pour la commande et/ou la régulation du moteur (6), qui peut être élargie par des modules d'extension (18, 20, 22), tandis que les modules d'extension (18, 20, 22) sont reliés ensemble avec l'unité de base (7) par un système de bus (17) et l'unité de base (7) reconnaît automatiquement, quel module d'extension (18, 20, 22) est raccordé et en ce que le traitement des informations est entrepris aussi bien dans l'unité de base (7) que dans le module d'extension considéré (18, 20, 22) et le résultat est comparé en commun, et dans le cas d'une différence, une information d'anomalie est délivrée et
par l'intermédiaire d'un manipulateur (15) de l'unité de base (7) des données mémorisées ou présentes peuvent être demandées et changées.

2. Commande et/ou régulation selon-la revendication 1,
caractérisée en ce que
dans l'unité de base (7) existe un contrôle du courant qui détermine l'intensité du moteur (6).

3. Commande et/ou régulation selon la revendication 2,
caractérisée en ce qu'
à partir de la surveillance du courant (51) sont cédées des impulsions au moteur (6) et celles-ci sont comparées avec les valeurs mémorisées dans un procédé de mesure en amont.

4. Commande et/ou régulation selon la revendicaticn 1,
caractérisée en ce que
le manipulateur (15) communique de manière bidirectionnelle par l'intermédiaire d'un inteface (16) RS 485 avec l'unité de base (7).

5. Commande et/ou régulation selon la revendication 4,
caractérisée en ce que
par l'intermédiaire de l'interface (16), on peut traiter aussi des données, qui n'ont pas de rapport en ligne directe avec la commande du moteur (6).

6. Commande et/ou régulation selon la revendication 1,
caractérisée en ce que
les modules d'extension (18, 20, 22) sont équipés d'une intelligence différente.

7. Commande et/ou régulation selon la revendication 1,
caractérisée en ce que
l'unité de base (7) et les modules d'extension (18, 20, 22) sont reliés par des connecteurs à fiches.

8. Commande et/ou régulation selon la revendication 7,
caractérisée en ce que
les connecteurs à fiches sont codés.

9. Commande et/ou régulation selon la revendication 1,
caractérisée en ce que
l'échange d'information entre l'unité de base (9) et les modules d'extension (18, 20, 22) a lieu par des bus de données (53) bidirectionnelle.

10. Commande et/ou régulation selon la revendication 10,
caractérisée en ce que
par les bus de données (53) l'information est transmise en série et est séparée dans l'unité de base (7) ou dans les modules d'extension (18, 20, 22) respectivement en parallèle.
